# EUROPEAN PATENT APPLICATION

(11) **EP 4 633 188 A1**
(43) Date of publication of application: **15.10.2025**
(21) Application number: 24196369.3
(22) Date of filing: 26.08.2024
(51) Int. Cl.: H04R 1/02, H04N 5/64

(54) **DISPLAY DEVICE**

(30) Priority: 09.04.2024 KR 20240047723
(71) Applicant: LG Electronics Inc., Yeongdeungpo-gu Seoul 07336 (KR)
(72) Inventor: HWANG, Sungphil, 06772 Seoul (KR); YANG, Sungeun, 06772 Seoul (KR)
(74) Representative: Schornack, Oliver

(57) **Abstract**

Disclosed is a display device. The display device of the present disclosure includes: a display panel; a frame located in a rear of the display panel; and a speaker (100) coupled to a rear of the frame, wherein the speaker (100) includes: a speaker box (101); a speaker unit (102) coupled to the speaker box (101); a plate (104) which covers the speaker unit (102) and which is coupled to the speaker box (101); a chamber (101P) which is formed between the speaker unit (102) and the plate (104), and which has an opening (101H) in one direction; and a cushion (103) which occupies a portion of the chamber (101P).

## Description

### CROSS-REFERENCE TO RELATED APPLICATION

This application claims the priority benefit of Korean Patent Application No. 10-2024-0047723, filed on April 9, 2024, the disclosures of which is incorporated herein by reference.

### BACKGROUND OF THE INVENTION

### Field of the invention

The present disclosure relates to a display device.

### Description of the Related Art

As information society develops, the demand for display devices is also increasing in various forms. In response to this, various display devices such as Liquid Crystal Display Device (LCD), Plasma Display Panel (PDP), Electroluminescent Display (ELD), Vacuum Fluorescent Display (VFD), and Organic Light Emitting Diode (OLED) have been researched and used in recent years.

Among these, a liquid crystal panel includes a TFT substrate and a color filter substrate that face each other with a liquid crystal layer interposed therebetween, and may display an image by using light provided from a backlight unit. In addition, an OLED panel may display an image by depositing an organic material layer capable of self-emitting light on a substrate on which a transparent electrode is formed.

Such a display device is equipped with a speaker. Here, the speaker is an apparatus that converts electrical acoustic signals into sound waves and outputs them. Speakers can be subdivided into woofer, midrange, tweeter, full range, etc. depending on the sound range.

Recently, in line with the trend of slimming display devices, the thickness of speakers provided in display devices is also becoming thinner.

### SUMMARY OF THE INVENTION

It is an objective of the present disclosure to solve the above and other problems.

Another object of the present disclosure may be to provide a structure that can improve the sound quality of a speaker of a display device.

Another object of the present disclosure may be to provide a structure that can improve the mid-and high-pitched sound characteristics of a speaker.

Another object of the present disclosure may be to provide a display device having a speaker capable of providing clear sound.

Another object of the present disclosure may be to provide a structure for smoothly outputting sound from a speaker to the outside of a display device.

In accordance with an aspect of the present disclosure, a display device may include: a display panel; a frame located in a rear of the display panel; and a speaker coupled to a rear of the frame, wherein the speaker may include: a speaker box; a speaker unit coupled to the speaker box; a plate which covers the speaker unit and which is coupled to the speaker box; a chamber which is formed between the speaker unit and the plate, and which is opened in one direction; and a cushion which occupies a portion of the chamber.

### BRIEF DESCRIPTION OF THE DRAWINGS

The above and other objects, features and advantages of the present invention will be more apparent from the following detailed description in conjunction with the accompanying drawings, in which:

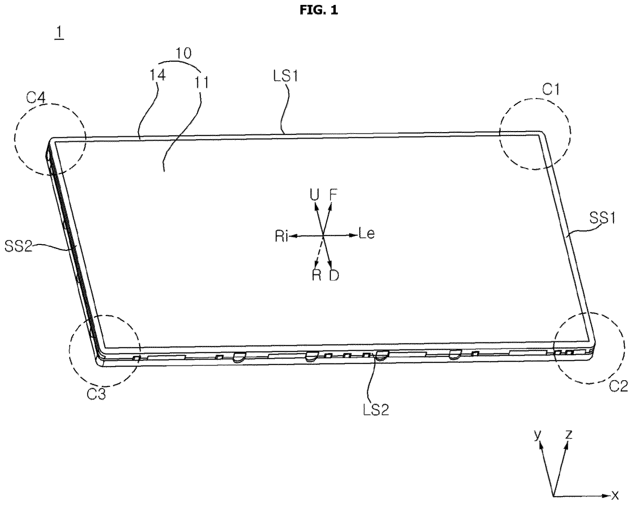

FIGS. 1 to 23 are diagrams illustrating examples of a display device according to embodiments of the present disclosure.

### DETAILED DESCRIPTION

Description will now be given in detail according to exemplary embodiments disclosed herein, with reference to the accompanying drawings. For the sake of brief description with reference to the drawings, the same or equivalent components may be denoted by the same reference numbers, and description thereof will not be repeated.

In general, suffixes such as "module" and "unit" may be used to refer to elements or components. Use of such suffixes herein is merely intended to facilitate description of the specification, and the suffixes do not have any special meaning or function.

In the present disclosure, that which is well known to one of ordinary skill in the relevant art has generally been omitted for the sake of brevity. The accompanying drawings are used to assist in easy understanding of various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are only used to distinguish one element from another.

It will be understood that when an element is referred to as being "connected with" another element, there may be intervening elements present. In contrast, it will be understood that when an element is referred to as being "directly connected with" another element, there are no intervening elements present.

A singular representation may include a plural representation unless context clearly indicates otherwise.

In the present application, it should be understood that the terms "comprises, includes," "has," etc. specify the presence of features, numbers, steps, operations, elements, components, or combinations thereof described in the specification, but do not preclude the presence or addition of one or more other features, numbers, steps, operations, elements, components, or combinations thereof.

Direction indications of up (U), down (D), left (Le), right (Ri), front (F), and rear (R) shown in the drawings are only for convenience of explanation, and the technical concept disclosed in this specification is not limited thereto.

Referring to FIG. 1, a display device 1 may include a display panel 11 that displays an image. The display 10 may include a display panel 11. A display 10 may be referred to as a display unit 10 or a head 10.

The display 10 includes a first long side LS1, a second long side LS2 opposite to the first long side LS1, a first short side SS1 adjacent to the first long side LS1 and the second long side LS2, and a second short side SS2 opposite to the first short side SS1. Meanwhile, for convenience of explanation, the lengths of the first and second long sides LS1 and LS2 are shown and described as being longer than the lengths of the first and second short sides SS1 and SS2, but it may be possible that the lengths of the first and second long sides LS1 and LS2 are approximately the same as the lengths of the first and second short sides SS1 and SS2.

The direction parallel to the short sides SS1 and SS2 may be referred to as an up-down direction. The direction parallel to the long sides LS1 and LS2 may be referred to as a left-right direction. The direction perpendicular to the short sides SS1 and SS2 and the long sides LS1 and LS2 may be referred to as a front-rear direction.

The direction in which the display panel 11 displays an image may be referred to as a front (F, z), and the opposite direction may be referred to as a rear R. The side of the first short side SS1 may be referred to as a left side (Le, x), and the side of the second short side SS2 may be referred to as a right side Ri. The side of the first long side LS1 may be referred to as an upper side (U, y), and the side of the second long side LS2 may be referred to as a lower side D.

The first long side LS1, the second long side LS2, the first short side SS1, and the second short side SS2 may be referred to as an edge of the display device 1. A point where the first long side LS1, the second long side LS2, the first short side SS1, and the second short side SS2 meet each other may be referred to as a corner.

A point where the first long side LS1 and the first short side SS1 meet may be a first corner C1. A point where the first short side SS1 and the second long side LS2 meet may be a second corner C2. A point where the second long side LS2 and the second short side SS2 meet may be a third corner C3. A point where the second short side SS2 and the first long side LS1 meet may be a fourth corner C4.

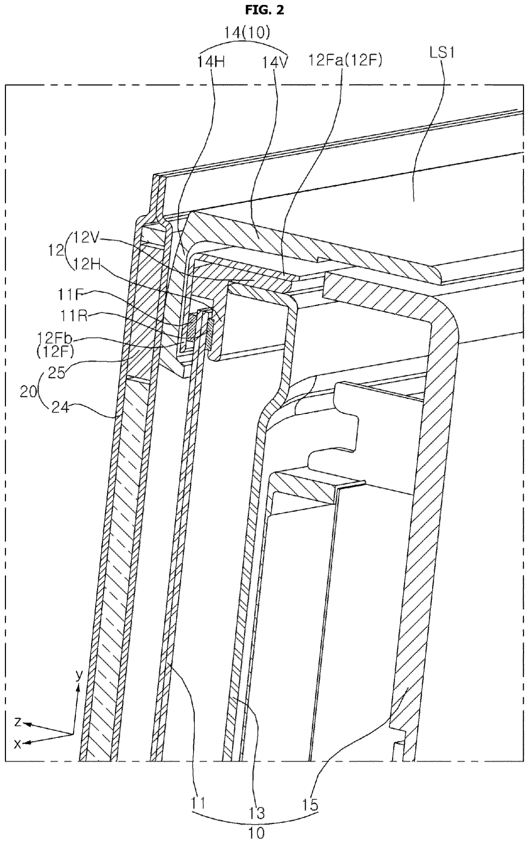

Referring to FIG. 2, the display 10 of the display device 1 may include a display panel 11, a frame 13, an inner frame 12, an outer frame 14, and a back cover 15.

The display panel 11 may form the front surface of the display 10. For example, the display panel 11 may be an LCD panel, an LED panel, or an OLED panel. If the display panel 11 is an LCD panel, the display 10 may include a backlight unit that provides light to the display panel 11. The display panel 11 may divide an image into a plurality of pixels and output an image with color, brightness, and saturation adjusted for each pixel. The display panel 11 may be divided into an active area where images are displayed and a de-active area where images are not displayed. The display panel 11 may generate light corresponding to the color of red, green, or blue according to a control signal.

The frame 13 may be located in a rear of the display panel 11. The frame 13 may have a plate shape having a size corresponding to the display panel 11. Electronic components such as a printed circuit board PCB may be mounted on the frame 13. The frame 13 may be referred to as a cover bottom 13 or a module cover 13.

The inner frame 12 may extend along the edge of the frame 13. A vertical portion 12V of the inner frame 12 may cover the edge of the display panel 11 and the edge of the frame 13. A horizontal portion 12H of the inner frame 12 may intersect with the vertical portion 12V and may be located between the display panel 11 and the frame 13. A vertical portion 12Fa of a front cover 12F may extend along the vertical portion 12V and cover the vertical portion 12V. A horizontal portion 12Fb of the front cover 12F may intersect with the vertical portion 12Fa and may be opposite to the front surface of the display panel 11. A front pad 11F may be attached to the front surface of the display panel 11 at between the horizontal portion 12Fb and the display panel 11. A rear pad 11R may be attached to the rear surface of the display panel 11 at between the display panel 11 and the horizontal portion 12H. The inner frame 12 may be referred to as a middle cabinet 12, a guide panel 12, or a side frame 12.

The outer frame 14 may extend along the inner frame 12 and cover the inner frame 12. A vertical portion 14V of the outer frame 14 may form the edges LS1, LS2, SS1, and SS2 (see FIG. 1) of the display 10. A horizontal portion 14H of the outer frame 14 may intersect with the vertical portion 14V and may cover the front surface of the display panel 11 adjacent to the edge of the display panel 11. The vertical portion 14V may cover the vertical portion 12Fa of the front cover 12F, and the horizontal portion 14H may cover the horizontal portion 12Fb of the front cover 12F. The outer frame 14 may be referred to as an end frame 14, a case top 14, or a side frame 14. One of the side frames 12 and 14 may be omitted, and at least one side frame may be coupled to the frame 13.

The back cover 15 may cover the rear of the frame 13, and may be coupled to the frame 13. The back cover 15 may form the rear surface of the display 10.

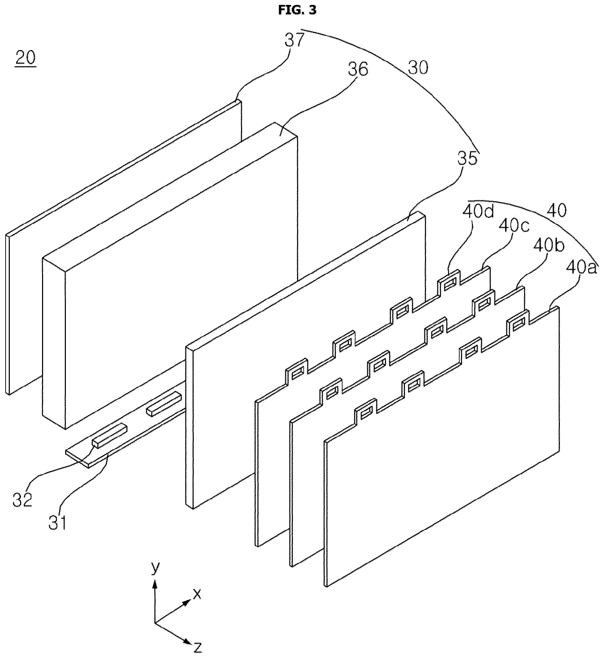

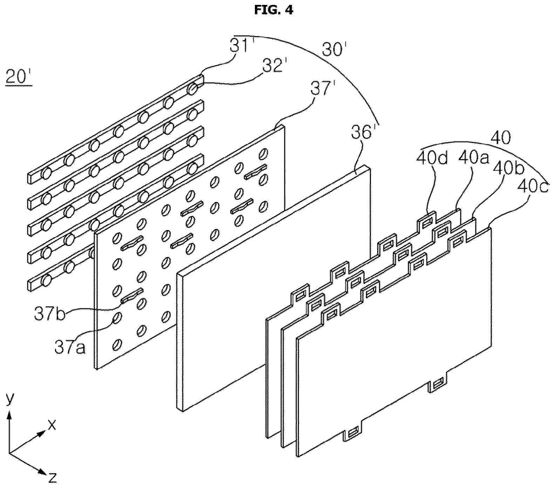

Referring to FIGS. 3 and 4, a backlight unit 20 may be located between the frame 13 (see FIG. 2) and the display panel 11 (see FIG. 2) and may provide light to the display panel 11. At this time, the display panel 11 may be an LCD panel 11.

Referring to FIG. 3, for example, the backlight unit 20 may include an optical layer 30 and an optical sheet 40 in front of the optical layer 30. The optical layer 30 may include a substrate 31, at least one light source 32, a light guide plate 36, and a reflective sheet 37.

The light guide plate 36 may be located between the frame 13 (see FIG. 2) and the display panel 11 (see FIG. 2). The substrate 31 may be adjacent to a lateral side of the light guide plate 36 and may extend long along the lateral side. At least one light source 32 may be mounted on the substrate 31 and may provide light to the lateral side of the light guide plate 36. The light source 32 may be a Light Emitting Diode LED, and the substrate 31 may be a Printed Circuit Board PCB. The reflective sheet 37 may be located on the rear surface of the light guide plate 36, and may reflect light provided from the light source 32 or reflected by the light guide plate 36 in a forward direction. Accordingly, the light guide plate 36 may provide the light received from the light source 32 in a forward direction. The diffusion plate 35 may be disposed in front of the light guide plate 36.

The optical sheet 40 may include at least one sheet. For example, the optical sheet 40 may include at least one prism sheet and/or at least one diffusion sheet. Light from the light guide plate 36 may be provided to the display panel 11 (see FIG. 2) through the optical sheet 40.

Referring to FIG. 4, for example, a backlight unit 20' may include an optical layer 30' and an optical sheet 40 in front of the optical layer 30'. The optical layer 30' may include a substrate 31', at least one light source 32', a diffusion plate 36', and a reflective sheet 37'.

The diffuser plate 36' may be located between the frame 13 (see FIG. 2) and the display panel 11 (see FIG. 2). The substrate 31' may be located in a rear of the diffusion plate 36', may have a plate shape, or may be composed of a plurality of straps. At least one light source 32' may be mounted on the substrate 31' and may provide light toward the rear surface of the diffusion plate 36'. The light source 32' may be a Light Emitting Diode (LED), and the substrate 31' may be a Printed Circuit Board (PCB). The reflective sheet 37' may be located in a rear of the diffusion plate 36' and may have a hole 37a where the light source 32' is located.

The reflective sheet 37' may reflect light provided from the light source 32' or reflected by the diffusion plate 36' in a forward direction. The supporter 37b may protrude from the reflective sheet 37' toward the diffusion plate 36' and support the rear surface of the diffusion plate 36'. Accordingly, the diffusion plate 36' may provide the light received from the light source 32' in a forward direction.

The optical sheet 40 may include at least one sheet. For example, the optical sheet 40 may include at least one prism sheet and/or at least one diffusion sheet. Light from the diffusion plate 36' may be provided to the display panel 11 (see FIG. 2) through the optical sheet 40.

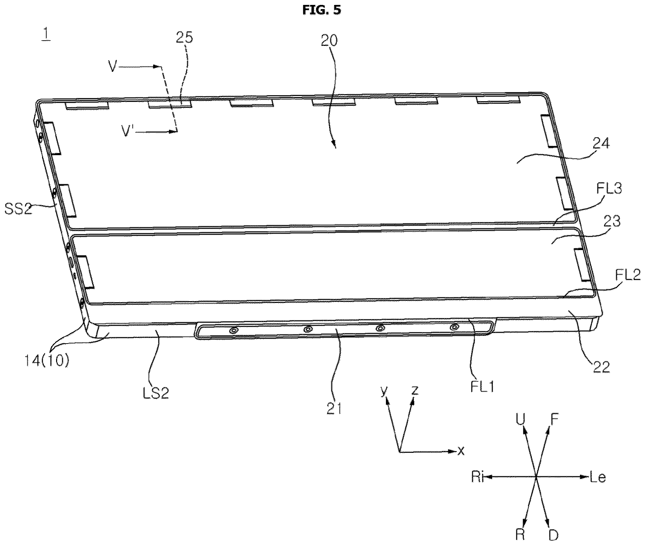

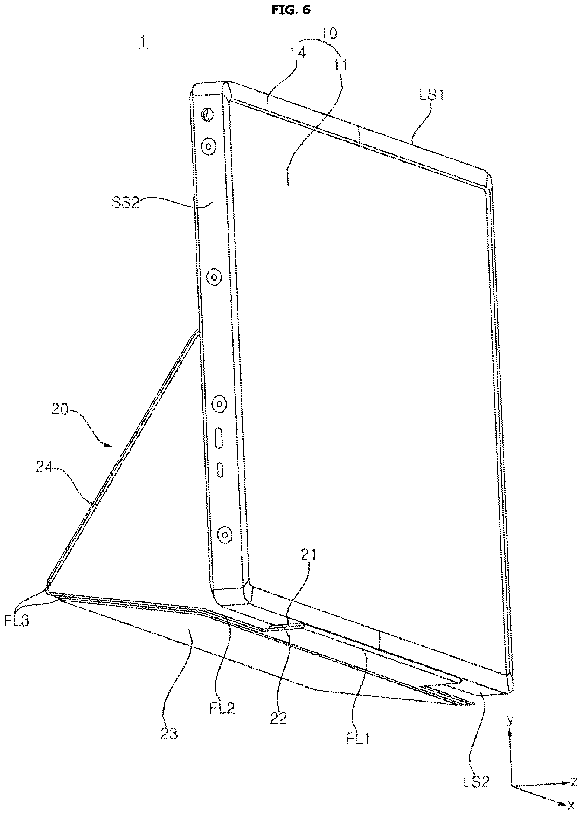

Referring to FIGS. 5 and 6, a foldable cover 20 may include a plurality of parts 21, 22, 23, and 24, and the plurality of parts 21, 22, 23, and 24 can be coupled with each other in a foldable manner.

A first part 21 may form one end of the foldable cover 20. The first part 21 may extend in a direction parallel to the portion of the outer frame 14 forming the second long side LS2, and may be detachably coupled to the portion of the outer frame 14.

A second part 22 may be connected to the first part 21 in a foldable manner. A folding line FL1 between the second part 22 and the first part 21 may be parallel in the horizontal direction.

A third part 23 may be connected to the second part 22 in a foldable manner. A folding line FL2 between the third part 23 and the second part 22 may be parallel in the horizontal direction.

A fourth part 24 may be connected to the third part 23 in a foldable manner. A folding line FL3 between the fourth part 24 and the third part 23 may be parallel in the horizontal direction. The fourth part 24 may form the other end of the foldable cover 20.

Referring to FIG. 5, the first part 21 of the foldable cover 20 may be coupled to the outer frame 14, and the second to fourth parts 22, 23, 24 may be bent from the first part 21 to cover the front surface of the display panel 11. Magnets 25 may be mounted near the edge of the third part 23 and near the edge of the fourth part 24, and may be magnetically coupled to the horizontal portion 14H of the outer frame 14 and/or the horizontal portion 12H of the inner frame 12 (see FIG. 2). Accordingly, the state of the foldable cover 20 covering the front surface of the display panel 11 can be maintained unless a force exceeding a certain level that can release the magnetic coupling is applied.

Referring to FIG. 6, the first part 21 of the foldable cover 20 may be coupled to the outer frame 14, and the second to fourth parts 22, 23, and 24 may be tilted to the rear of the first part 21. The distal end of the fourth part 24 may be inserted into a groove provided on the rear surface of the back cover 15 or may be coupled to a holder provided on the rear surface of the back cover 15. Accordingly, the foldable cover 20 can support the display 10. The foldable cover 20 may be referred to as a stand 20.

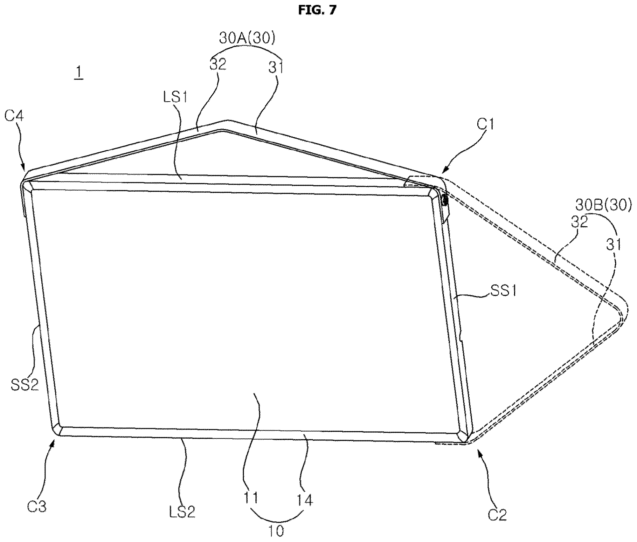

Referring to FIG. 7, the foldable cover 20 of the display device 1 described above with reference to FIGS. 5 and 6 may be separated from the display 10 of the display device 1, and the strap 30 of the display device 1 may be detachably coupled to the edge of the display 10.

The strap 30 may extend long, and both ends of the strap 30 may be detachably coupled to the edge of the display 10. The strap 30 may include a first part 31 forming one end of the strap 30 and a second part 32 forming the other end of the strap 30.

For example, the strap 30A may face the first long side LS1 of the display 10, and the first part 31 may be adjacent to the first short side SS1 and may be detachably coupled to the first long side LS1 and/or the first short side SS1. The second part 32 may be adjacent to the second short side SS2 and detachably coupled to the first long side LS1 and/or the second short side SS2. The length of the strap 30A may be longer than the length of the first long side LS1 and may be bent. The bent portion of the strap 30A between the first part 31 and the second part 32 may be caught on a fixing member such as a nail driven into a wall. Accordingly, the display device 1 may be installed on the wall with the long sides LS1 and LS2 parallel to the horizontal direction (i.e., parallel to the ground).

For example, the strap 30B may face the first short side SS1 of the display 10, and the first part 31 may be adjacent to the second long side LS2 and may be detachably coupled to the first short side SS1 and/or the second long side LS2. The second part 32 may be adjacent to the first long side LS1 and detachably coupled to the first short side SS1 and/or the first long side LS1. The length of the strap 30B may be longer than the length of the first short side SS1 and may be bent. The bent portion of the strap 30B between the first part 31 and the second part 32 may be caught on a fixing member such as a nail driven into a wall. Accordingly, the display device 1 may be installed on the wall with the short sides SS1 and SS2 parallel to the horizontal direction (i.e., parallel to the ground).

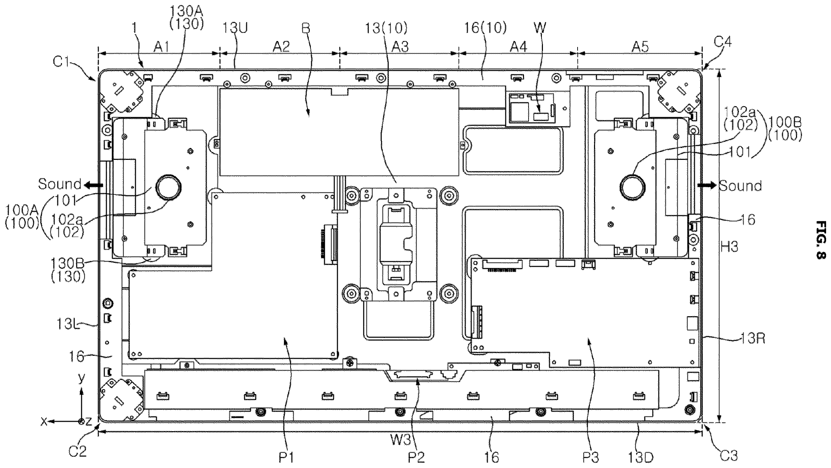

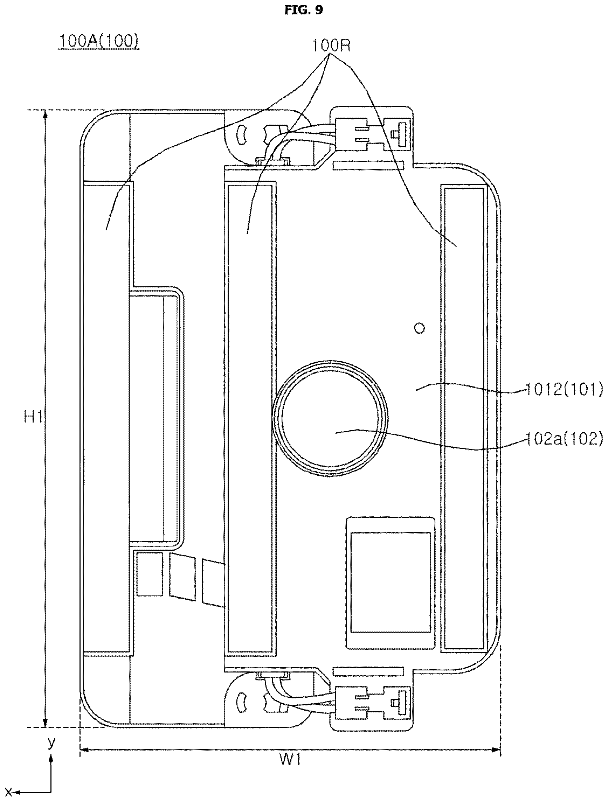

Referring to FIGS. 8 and 9, electronic components may be coupled to the rear surface of the frame 13.

A power supply board P1 may be adjacent to the left side 13L of the frame 13 and may be coupled to the rear of the frame 13. The power supply board P1 may provide power to the display device 1. A timing controller board P2 may be adjacent to the lower side 13D of the frame 13 and may be coupled to the rear of the frame 12. The timing controller board P2 may provide an image signal to the display panel 11 (see FIG. 2). A main board P3 may be adjacent to the right side 13R of the frame 13 and may be coupled to the rear of the frame 13. The main board P3 may control the components of the display device 1.

The communication module W may be adjacent to the upper side 13U of the frame 13 and may be coupled to the rear of the frame 13. The communication module W may communicate wirelessly with an external device. The communication module W may be equipped with a Wi-Fi antenna and/or a Bluetooth antenna. The communication module W may transmit information related to the display device 1 to an external device or receive information related to the operation of the display device 1 from an external device. The battery B may be adjacent to the upper side 13U of the frame 13 and may be coupled to the rear of the frame 13. The battery B may be rechargeable and may provide power to the components of the display device 1 described above and below through the power supply board P1. A user may carry and use the display device 1.

A speaker 100 may be adjacent to the edge of the frame 13 and may be coupled to the rear of the frame 13. The speaker 100 may be adjacent to the lateral side of the frame 13 and output sound toward the lateral side. A first speaker 100A may be coupled to the rear of the frame 13 while being adjacent to the left side 13L of the frame 13, and may output sound toward the left side of the display 10. A second speaker 100B may be coupled to the rear of the frame 13 while being adjacent to the right side 13R of the frame 13, and output sound toward the right of the display 10.

The speakers 100A and 100B may be closer to the upper side 13U of the frame 13 than to the lower side 13D. Battery B may be located between speakers 100A and 100B. In the vertical direction, the height H1 of each of the speakers 100A and 100B may be less than half the height H3 of the frame 13. In the horizontal direction, the width W1 of each of the speakers 100A and 100B may be less than 1/5 of the width W3 of the frame 13. In the width direction of the frame 13, the frame 13 may be divided into a first section A1, a second section A2, a third section A3, a fourth section A4, and a fifth section A5. The first speaker 100A may be located in the first section A1, and the second speaker 100B may be located in the fifth section A5.

The speakers 100A and 100B may have the same structure and shape and may face opposite direction. The second speaker 100B may be equivalent to a 180-degree rotation of the first speaker 100A about the z-axis (i.e., an axis parallel to the front-rear direction). Alternatively, the second speaker 100B may be left-right symmetrical to the first speaker 100A. The description of the first speaker 100A can be identically applied to the second speaker 100B. The description of the second speaker 100B can be identically applied to the first speaker 100A.

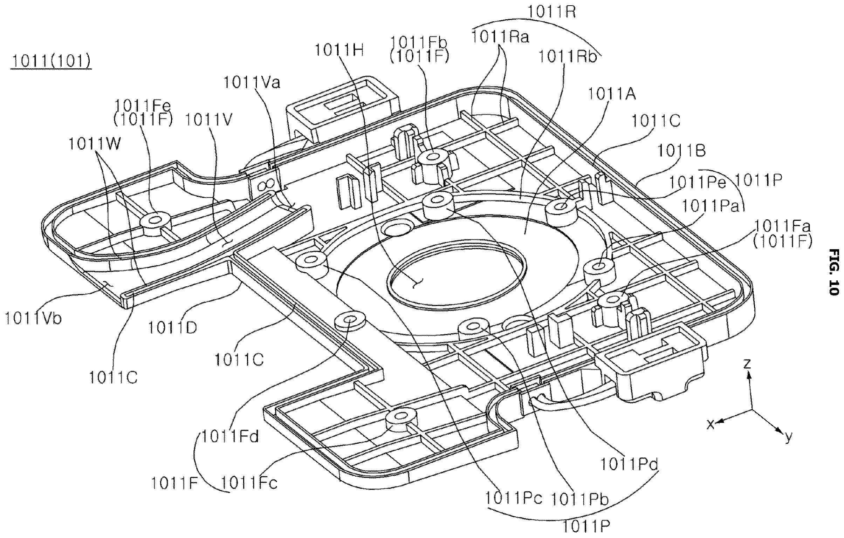

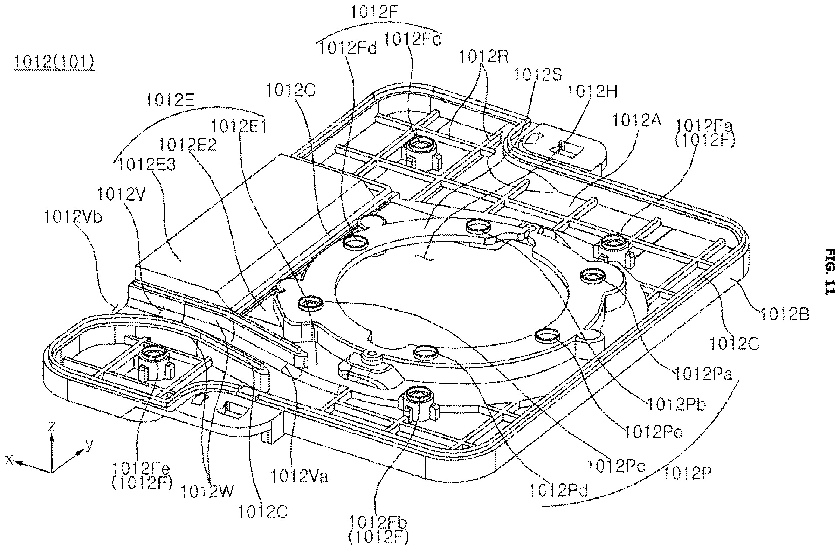

Referring to FIGS. 10 and 11, the speaker 100 may include a box 101. The box 101 may be referred to as a speaker box 101, an enclosure 101, a housing 101, or a case 101. The box 101 may include a first box 1011 and a second box 1012.

The first box 1011 may be referred to as a bottom box 1011, a rear box 1011, a rear case 1011, or a base 1011. The first box 1011 may include a bottom 1011A and a side wall 1011B.

The bottom 1011A may form the rear surface of the first box 1011. The rear surface of the first box 1011 may be the bottom of the box 101. The bottom 1011A may have the overall shape of a square plate having a notch formed on one side. A notch 1011D or a groove 1011D may be formed from the left side (or right side) of the bottom 1011A to the inside of the bottom 1011A. The notch 1011D or the groove 1011D may form a square hole.

A fixing portion 1011F may be formed on the bottom 1011A. The fixing portion 1011F may protrude in a forward direction from the bottom 1011A. The fixing portion 1011F may have a hollow cylinder shape, and screw threads may be formed on the inner circumferential surface of the fixing portion 1011F. The plurality of fixing portions 1011Fa, 1011Fb, 1011Fc, 1011Fd, and 1011Fe may be spaced apart from each other.

The hole 1011H may be formed by penetrating the bottom 1011A in a front-rear direction. The hole 1011H may be at or close to the center of the bottom 1011A. The hole 1011H may be a circular hole.

A rib 1011R may be formed on the bottom 1011A. The ribs 1011Ra may be formed in a grid pattern. An annular rib 1011Rb may be formed around the hole 1011H and may extend along the hole 1011H.

A coupling portion 1011P may be formed on the bottom 1011A. The coupling portion 1011P may protrude in a forward direction from the bottom 1011A. The coupling portion 1011P may be formed on the annular rib 1011Rb or may be adjacent to the annular rib 1011Rb. A plurality of coupling portions 1011Pa, 1011Pb, 1011 Pc, 1011Pd, and 1011Pe may be spaced apart from each other along the annular rib 1011Rb. At least some coupling portions 1011Pa and 1011Pc of the plurality of coupling portions 1011Pa, 1011Pb, 1011Pc, 1011Pd, and 1011Pe may have a hollow cylinder shape, and the screw threads may be formed on the inner circumferential surface of the coupling portions 1011Pa, and 1011Pc. The remaining coupling portions 1011Pb, 1011Pd, and 1011Pe may also have a hollow cylinder shape. The coupling portion 1011P may be referred to as a boss 1011P.

The side wall 1011B may bend in a forward direction from the edge of the bottom 1011A and extend along the edge. The side wall 1011B may be formed along the circumference of the bottom 1011A. An insertion groove 1011C may be formed at the front end of the side wall 1011B and may extend along the side wall 1011B.

A pair of partition walls 1011W may be formed on the bottom 1011A and connected to the side wall 1011B. A pair of partition walls 1011W may be adjacent to the notch 1011D. A portion of the pair of partition walls 1011W may form a portion of the side wall 1011B extending along the notch 1011D. A flow path 1011V may be formed between a pair of partition walls 1011W. An inlet 1011Va of the flow path 1011V may face a space in front of the bottom 1011A, and an outlet 1011Vb of the flow path 1011V may be formed in the side wall 1011B and face the outside. The insertion groove 1011C may be formed at the front end of the pair of partition walls 1011W and may extend along the pair of partition walls 1011W.

The second box 1012 may be referred to as a top box 1012, a front box 1012, a front case 1012, or a cover 1012. The second box 1012 may include a top 1012A and a side wall 1012B.

The top 1012A may form the front surface of the second box 1012. The front surface of the second box 1012 may be a top of the box 101. The top 1012A may have a shape corresponding to the bottom 1011A (see FIG. 10). The top 1012A may have an overall square plate shape.

A fixing portion 1012F may be formed on the rear surface of the top 1012 and may be aligned with the fixing portion 1011F (see FIG. 10). The fixing portion 1012F may protrude in a rearward direction from the top 1012. The fixing portion 1012F may have a hollow cylinder shape, and screw threads may be formed on the inner circumferential surface of the fixing portion 1012F. Each of the plurality of fixing portions 1012Fa, 1012Fb, 1012Fc, 1012Fd, and 1012Fe may be located on each of the plurality of fixing portions 1011Fa, 1011Fb, 1011Fc, 1011Fd, and 1011Fe (see FIG. 10). A portion of the fixing portion 1011F may be inserted into the fixing portion 1012F, so that the fixing portions 1011F and 1012F may guide the coupling of the first and second boxes 1011 and 1012. A fastening member such as a screw may penetrate the fixing portion 1011F and be fastened to the fixing portion 1012F, so that the first box 1011 can be coupled to the second box 1012.

The hole 1012H may be formed to penetrate the top 1012A in a front-rear direction, and the hole 1012H may be at or close to the center of the top 1012A. The hole 1012H may be aligned with the hole 1011H (see FIG. 10). The hole 1012H may be a circular hole, and the diameter of the hole 1012H may be larger than the diameter of the hole 1011H.

The rib 1012R may be formed on the rear surface of the top 1012A. The ribs 1012R may be formed in a grid pattern.

A support portion 1012S may be formed by being pressed from the front surface of the top 1012A in a rearward direction. The hole 1012H may be formed in the support portion 1012S, and the support portion 1012S may be a ring-shaped stepped portion.

A coupling portion 1012P may be formed on the support portion 1012S. The coupling portion 1012P may be aligned with the coupling portion 1011P (see FIG. 10). Some coupling portions 1012Pa and 1012Pc may be provided as through holes 1012Pa and 1012Pc that penetrate the support portion 1012S in a front-rear direction. The remaining coupling portions 1012Pb, 1012Pd, and 1012Pe may protrude in a rearward direction from the rear surface of the support portion 1012S. Through holes 1012Pa and 1012Pc may be aligned with the holes of the coupling portions 1011Pa and 1011 Pc, and the coupling portions 1011Pb, 1011Pd, and 1011Pe may be inserted into the inside of the coupling portions 1012Pb, 1012Pd, and 1012Pe.

A pressed portion 1012E may be formed by being pressed from the front surface of the top 1012A in a rearward direction. The pressed portion 1012E may form several steps. The pressed portion 1012E may include a first pressed portion 1012E1, a second pressed portion 1012E2, and a third pressed portion 1012E3. A first pressed portion 1012E1 may form a step that is lowered from the front surface of the top 1012A in a rearward direction. A second pressed portion 1012E2 may form a step that is lowered from the front surface of the first pressed portion 1012E1 in a rearward direction. A third pressed portion 1012E3 may form a step that is lowered from the front surface of the second pressed portion 1012E2 in a rearward direction. The support portion 1012S may form a step that is lowered in a rearward direction from the first pressed portion 1012E1 and/or the second pressed portion 1012E2. The third pressed portion 1012E3 may be located in the notch 1011D of the first box 1011. An insertion protrusion 1012C may be formed around the third pressed portion 1012E, and may be inserted into the insertion groove 1011C (see FIG. 10) around the notch 1011D.

The side wall 1012B may bend in a rearward direction from the edge of top 1012A and extend along the edge. The side wall 1012B may be formed along the circumference of the top 1012A. The insertion protrusion 1012C may be formed at the rear end of the side wall 1012B and may extend along the side wall 1012B. The insertion protrusion 1012C may be inserted into the insertion groove 1011C (see FIG. 10), so that the insertion protrusion 1012C and the insertion groove 1011C may guide the coupling of the first and second boxes 1011 and 1012.

A pair of partition walls 1012W may be formed at the rear surface of the top 1012A and may be connected to the side wall 1012B. The pair of partition walls 1012W may be aligned with the pair of partition walls 1011W (see FIG. 10). A flow path 1012V may be formed between the pair of partition walls 1012W. An inlet 1012Va of the flow path 1012V may face a space in the rear of the top 1012A, and an outlet 1012Vb of the flow path 1012V may be formed in the side wall 1012B and face the outside. The insertion protrusion 1012C may be formed at the front end of the pair of partition walls 1012W and may be inserted into the insertion groove 1011C (see FIG. 10) formed on the pair of partition walls 1011W.

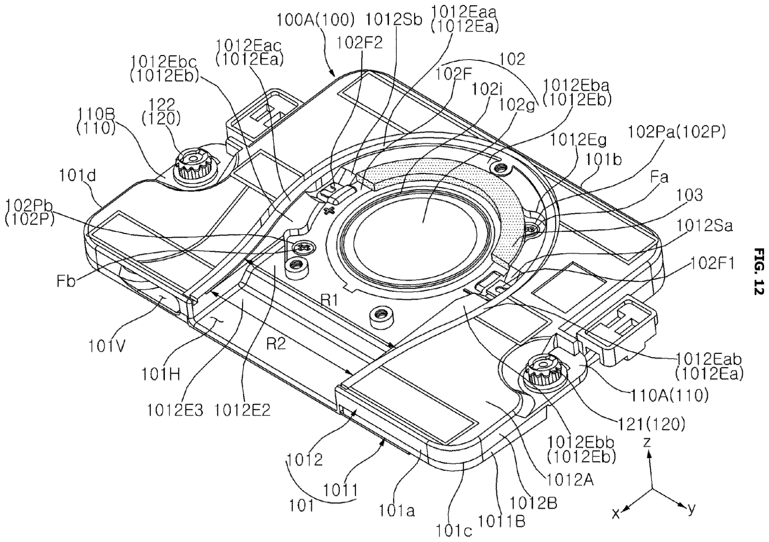

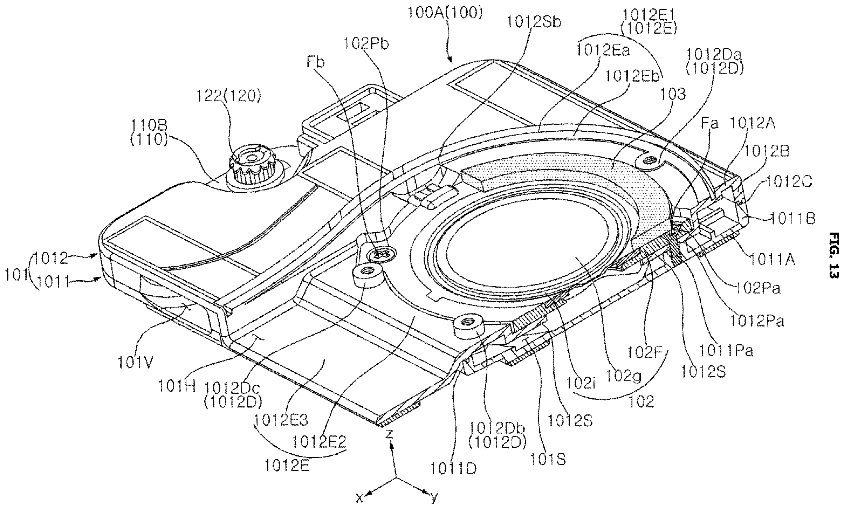

Referring to FIGS. 12 and 13, the first and second boxes 1011 and 1012 may be coupled with each other to form an outer shape of the speaker 100. An internal space 101S of the box 101 may be formed between the first box 1011 and the second box 1012. The flow path 1011V (see FIG. 10) between the pair of partition walls 1011W and the flow path 1012V (see FIG. 11 may provide a duct 101V connecting the internal space 101S of the box 101 to the outside. Air may pass through the duct 101V. The inlet of the duct 101V may face the internal space 101S of the box 101, and the outlet of the duct 101V may be formed on one side surface of the box 101 to face the outside. The duct 101V may be referred to as a channel 101V.

A speaker frame 102F of a speaker unit 102 may be located on the support portion 1012S of the second box 1012. The support portion 1012 may be a groove formed along the speaker frame 102F. The speaker frame 102F may have an overall ring shape. The support portion 1012S may support the speaker frame 102F. The support portion 1012S may be located on a plurality of coupling portions 1011Pa, 1011Pb, 1011Pc, 1011Pd, and 1011Pe (see FIG. 10).

At least one coupling hole 102P may be formed in the speaker frame 102F and may be aligned with the coupling portions 1012P and 1011P. The coupling hole 102P may be formed in a coupling portion (no reference numeral) that protrudes in the radial direction of the frame 10F from the outer circumferential surface of the speaker frame 102F. A first coupling hole 102Pa may be aligned with a first through hole 1012Pa and a hole of a first coupling portion 1011Pa, and a first fastening member Fa, such as a screw, may penetrate the first coupling hole 102Pa and the first through hole 1012Pa and be fastened to the hole of the first coupling portion 1011Pa. A second coupling hole 102Pc may be aligned with a second through hole 1012Pc (see FIG. 11) and a hole of a second coupling portion 1011Pc (see FIG. 10), and a second fastening member Fc, such as a screw, may penetrate the second coupling hole 102Pc and the second through hole 1012Pc and be fastened to the hole of the second coupling portion 1011Pc. For example, the first and second coupling holes 102Pa and 102Pc may be spaced apart from each other at intervals of 180 degrees.

Accordingly, the speaker frame 102F of the speaker unit 102 can be detachably coupled to the second box 1012 and the first box 1011.

The box 101 may have an overall flat rectangular box shape, and may include a first side 101a, a second side 101b, a third side 101c, and a fourth side 101d. The first and second sides 101a and 101b may be opposite to each other and may be long sides. The third and fourth sides 101c and 101d may be opposite to each other and may be short sides. The outlet of the duct 101V may be formed on the first side 101a. An opening 101H may be formed on the first side 101a while being adjacent to the duct 101V. The opening 101H may be referred to as a speaker hole 101H.

The pressed portion 1012E may be formed around the speaker frame 102F.

The first pressed portion 1012E1 may form a step that is lowered from the front surface of the second box 1012 in a rearward direction. The first pressed portion 1012E1 may include a coupling portion 1012Ea and a recessed portion 1012Eb. The coupling portion 1012Ea may form a step that is lowered from the front surface of the second box 1012 in a rearward direction, and the recessed portion 1012Eb may be recessed from the front surface of the coupling portion 1012Ea. The coupling portion 1012Ea may form the outer circumference of the first pressed portion 1012E1, and the recessed portion 1012Eb may form the inner circumference of the first pressed portion 1012E1. With respect to the front surface of the second box 1012, the coupling portion 1012Ea may have a first depth, and the recessed portion 1012Eb may have a second depth greater than the first depth.

The coupling portion 1012Ea may be formed along an open-ring open toward the opening 101H of the box 101. The coupling portion 1012Ea may include a first section 1012Eaa, a second section 1012Eab, and a third section 1012Eac. The first to third sections 1012Eaa, 1012Eab, and 1012Eac may have an overall bulb shape. The first section 1012Eaa may be adjacent to the second side 101b of the box 101, and may extend along a semicircle of the speaker frame 102F. The second section 1012Eab may extend from one end of the first section 1012Eaa toward the first side 101a of the box 101. The third section 1012Eac may extend from the other end of the first section 1012Eaa toward the first side 101a of the box 101. In the direction in which both ends of the first section 1012Eaa are spaced apart from each other, the distance between the second section 1012Eab and the third section 1012Eac may become smaller as it approaches the first side 101a. At least a portion of the second section 1012Eab and at least a portion of the third section 1012Eac may be curved sections. The area between the second and third sections 1012Eab and 1012Eac may include a tapered area R1 whose width becomes smaller as it approaches the opening 101H, and a straight area R2 whose width is maintained to be constant.

The recessed portion 1012Eb may connect the coupling portion 1012Ea and the support portion 1012S and may be formed along an open-ring open toward the opening 101H. The recessed portion 1012Eb may include a first part 1012Eba, a second part 1012Ebb, and a third part 1012Ebc. The first part 1012Eba may be connected to the first section 1012Eaa and may extend along an arc smaller than a semicircle of the speaker frame 102F. A groove 1012Eg may be formed in the first part 1012Eba to correspond to the coupling portion of the speaker frame 102F to which the first fastening member Fa is coupled. The second part 1012Ebb may be adjacent to one end of the first part 1012Eba and may be connected to the second section 1012Eab. The third part 1012Ebc may be adjacent to the other end of the first part 1012Eba and may be connected to the third section 1012Eac. The first to third parts 1012Eba, 1012Ebb, and 1012Ebc may be located in a space between a portion of the coupling portion 1012Ea and a portion of the speaker frame 102F. The first groove 1012Sa may be formed between the first part 1012Eba and the second part 1012Ebb, and the first holder 102F1 protruding from the speaker frame 102F may be located in the first groove 1012Sa. A first hole may be formed in the first groove 1012Sa, and a tinsel wire connected to the coil 102e may pass through the first hole. The second groove 1012Sb may be formed between the first part 1012Eba and the third part 1012Ebc, and the second holder 102F2 protruding from the speaker frame 102F may be located in the second groove 1012Sb. A second hole may be formed in the second groove 1012Sb, and a tinsel wire connected to the coil 102e may pass through the second hole.

The second pressed portion 1012E2 may be located between the speaker frame 102F and the opening 101H, and may form a step that is lowered in a rearward direction from the recessed portion 1012Eb of the first pressed portion 1012E1. The support portion 1012S may form a step that is lowered in a rearward direction from the recessed portion 1012Eb of the first pressed portion 1012E1 and the second pressed portion 1012E2. The speaker frame 102F may be located on the support portion 1012S and may form a step that is lowered in a rearward direction from the recessed portion 1012Eb.

The third pressed portion 1012E3 may be located between the second pressed portion 1012E2 and the opening 101H, and may form a step that is lowered in a rearward direction from the second pressed portion 102E2. The third pressed portion 1012E3 may be located in the notch 1011D.

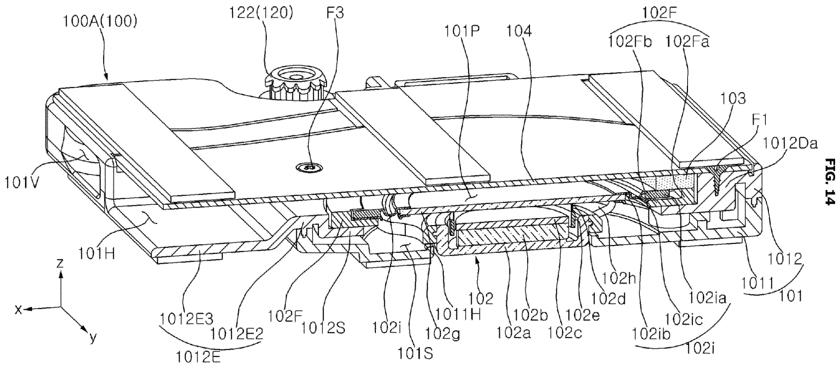

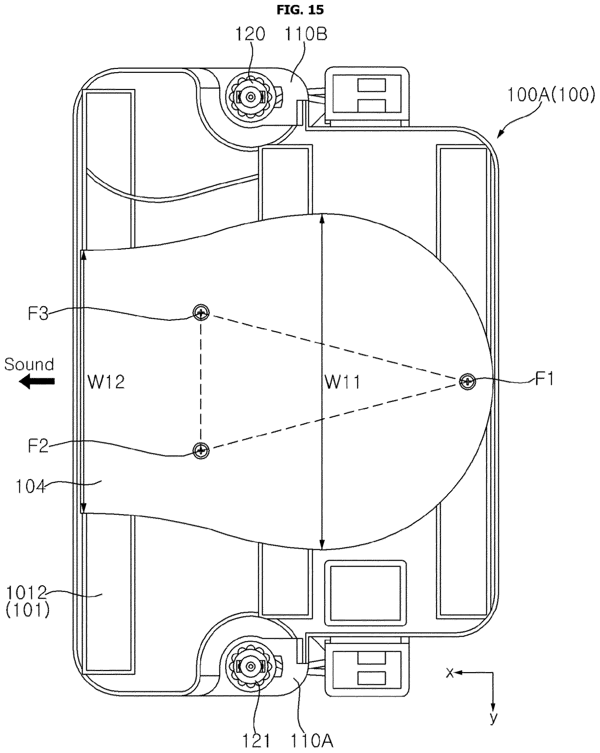

Referring to FIGS. 14 and 15, the speaker unit 102 may be located in the holes 1011H and 1012H of the box 101. The speaker unit 102 may include a speaker frame 102F, a yoke 102a, a magnet 102b, a plate 102c, a bobbin 102d, a coil 102e, a diaphragm 102g, a damper 102h, and an edge 102i.

The yoke 102a may form one side of the speaker unit 102. The yoke 102a may be located in the hole 1011H of the first box 1011. The yoke 102a may have a cup shape that is opened in a forward direction.

The magnet 102b may be disposed inside the yoke 102a. The magnet 102b may have a coin shape. The plate 102c may be coupled to the magnet 102b and may have a shape corresponding to the magnet 102b.

The bobbin 102d may be located in an air gap between the plate 102c and the yoke 102a and may have a hollow cylinder shape. The coil 102e may be formed or wound on the outer circumferential surface of the bobbin 102d, and may be referred to as a voice coil 102e.

The diaphragm 102g may be coupled to the front of the bobbin 102d. The diaphragm 102g may have a flat disk shape. Alternatively, the diaphragm 102g may have a dome or cone shape. The cone-shaped diaphragm 102g may be referred to as a cone paper 102g. The elastic damper 102h may be coupled to the speaker frame 102F, and the damper 102h may be coupled to the diaphragm 102g or the bobbin 102d to support the diaphragm 102g.

The edge 102i may be located between the diaphragm 102g and the speaker frame 102F. The edge 102i may be coupled to the outer surface of the diaphragm 102g and the inner surface of the speaker frame 102F. The edge 102i may have elasticity and may support the movement of the diaphragm 102g. The edge 102i may be referred to as a speaker edge 102i or a surround 102i.

When a magnetic force line is formed in the air gap between the magnet 102b and the yoke 102a and a current flows in the coil 102e, Lorentz force may be generated. The magnitude of the Lorentz force may be proportional to the magnitude of the magnetic force lines (magnetic flux density), the amount of current, and the length of the wound coil, and the direction of force may be directed perpendicular to a plane formed by magnetic flux density and current.

Accordingly, the diaphragm 102g may vibrate in a front-rear direction. In response to the vibration of the diaphragm 102g, the air inside the speaker box 101 may also resonate and its pressure may change.

The speaker frame 102F may include a support portion 102Fa and a recessed portion 102Fb. The support portion 102Fa may be located on the support 1012S. The recessed portion 102Fb may be formed by recessing from the front surface of the support portion 102Fa. The edge 102i may include a first part 102ia coupled to the recessed part 102Fb, a second part 102ib coupled to the diaphragm 102g, and a wave-shaped third part 102ic connecting the first part 102ia and the second part 102ib. The front surface of the first part 102ia may be parallel to the front surface of the support portion 102Fa.

A plate 104 may be located on the coupling portion 1012Ea (see FIG. 12) of the first pressed portion 1012E1 and may cover the front of the speaker unit 102. The plate 104 may be spaced apart from the recessed portion 1012Eb (see FIG. 12) of the first pressed portion 1012E1. The plate 104 may include a metal material such as iron Fe. The circumference of the plate 104 may be formed along the coupling portion 1012Ea. The plate 104 may have an overall bulb shape. The plate 104 may be attached or bonded to the coupling portion 1012Ea. Accordingly, the plate 104 may be coupled to the box 101.

A fixing portion 1012D (see FIG. 13) may be located inside the edge of the plate 104. The fixing portion 1012D may be formed in the pressed portion 1012E. The front end of the fixing portion 1012D may be parallel to the front surface of the coupling portion 1012Ea. That is, with respect to the front surface of the second box 1012, the depth of the front end of the fixing portion 1012D may be the same as the depth of the front surface of the coupling portion 1012Ea, and the depth of the front end of the fixing portion 1012D may be smaller than the depth of the front surface of the recessed portion 1012Eb. Accordingly, the plate 104 may be located on the coupling portion 1012Ea and the fixing portion 1012D.

A first fixing portion 1012Da (see FIG. 13) may protrude in a forward direction from the recessed portion 1012Eb and may be provided with a screw fastening hole. A second fixing portion 1012Db (see FIG. 13) may protrude in a forward direction from the second pressed portion 1012E2 and may be provided with a screw fastening hole. A third fixing portion 1012Dc (see FIG. 13) may protrude in a forward direction from the second pressed portion 1012E2 and may be provided with a screw fastening hole. The first to third fixing portions 1012Da, 1012Db, and 1012Dc may be located at vertices of a triangle (see dotted line in FIG. 15). Fastening members F1, F2, and F3, such as screws, may penetrate the plate 104 and be fastened to the first to third fixing portions 1012Da, 1012Db, and 1012Dc. Alternatively, the plate 104 may be attached or bonded to the first to third fixing portions 1012Da, 1012Db, and 1012Dc.

Accordingly, the plate 104 may be firmly coupled to the box 101, and as a result, shaking of the plate 104 can be minimized and stability can be improved. In addition, contact between the plate 104 and the recessed portion 1012Eb can be minimized or prevented.

The diaphragm 102g of the speaker unit 102 may vibrate in a front-rear direction and output sound toward the plate 104. The plate 104 may guide the sound of the speaker unit 102 toward the opening 101H. The opening 101H may be an outlet of a chamber 101P between the speaker unit 102 and the plate 104, and may be formed between the plate 104 and the third pressed portion 1012E3. The chamber 101P may be referred to as a space 101P.

A cushion 103 may be located between the speaker frame 102F of the speaker unit 102 and the plate 104. The cushion 103 may be opposite to the opening 101H. The cushion 103 may extend along the first part 1012Eba of the recessed portion 1012Eb, and may have an arc shape. The cushion 103 may be curved. The cushion 103 may be round. The rear surface of the cushion 103 may be in contact with the speaker frame 102F. The rear surface of the cushion 103 may be adhered to the speaker frame 102F. The rear surface of the cushion 103 may be adhered to the support portion 102Fa of the speaker frame 102F and the first part 102ia of the edge 102i. The front surface of the cushion 103 may be in contact with the plate 104. The front surface of the cushion 103 may be adhered to the plate 104. When an external force is applied in the thickness direction of the cushion 103, the cushion 103 may be compressed in the thickness direction. When the external force is released, the cushion 103 can be restored again. The original thickness of the cushion 103 may be greater than or equal to the gap between the speaker frame 102F and the plate 104. The cushion 103 may be pressed by the plate 104. For example, the cushion 103 may include an ethylene-vinyl acetate (EVA) material.

Accordingly, the cushion 103 may occupy a portion of the chamber 101P between the speaker unit 102 and the plate 104. The cushion 103 can reduce vibration of the plate 104.

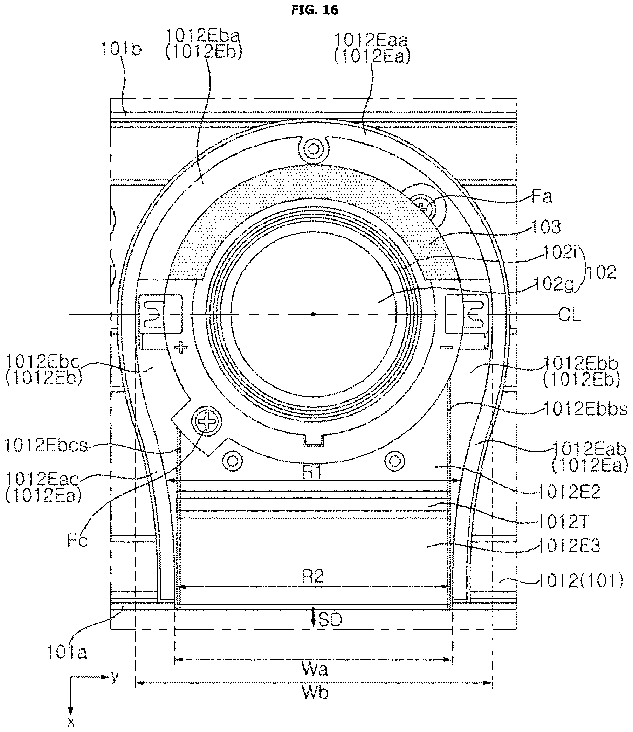

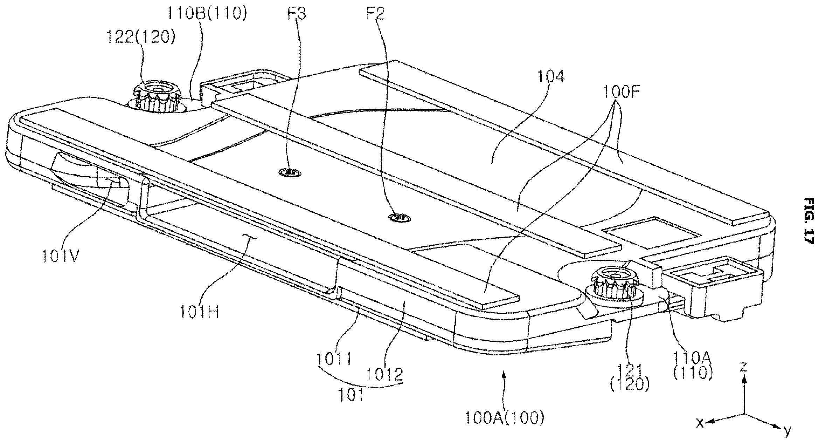

Referring to FIGS. 16 and 17, the center line CL may pass through the center of the diaphragm 102g of the speaker unit 102 and extend in the radial direction of the diaphragm 102g. The center line CL may intersect the sound direction SD of the speaker 100. The sound direction SD may be a direction in which the sound output from the speaker unit 102 is guided by the plate 104 (see FIG. 15) and output to the outside through the opening 101H. The sound direction SD of the first speaker 100A (see FIG. 8) may be a leftward direction of the first speaker 100A, and the sound direction SD of the second speaker 100B (see FIG. 8) may be a rightward direction of the second speaker 100B. If the speaker output direction SD is parallel to the horizontal direction, the center line CL may be parallel to the vertical direction.

The recessed portion 1012Eb may form a step that rises in a forward direction from the support portion 1012S where the speaker frame 102F is located. The recessed portion 1012Eb may be closer to the plate 104 than the speaker frame 102F, but may be spaced apart from the plate 104. The first part 1012Eba may be located between the center line CL and the second side 101b of the box 101, and may have an arc shape smaller than a semicircle. The second and third parts 1012Ebb and 1012Ebc may be located between the center line CL and the first side 101a of the box 101.

Accordingly, the recessed portion 1012Eb may occupy a portion of the chamber 101P between the speaker unit 102 and the plate 104, at between the speaker frame 102F and the coupling portion 1012Ea. Meanwhile, the third part 1012Ebc may include a groove corresponding to a coupling portion of the speaker frame 102F to which the second fastening member Fc is coupled.

The second part 1012Ebb may include a straight side 1012Ebbs that faces the chamber 101P between the second and third press parts 1012E2 and 1012E3 and the plate 104 and extends in the sound direction SD. The third part 1012Ebc may include a straight side 1012Ebcs that faces the chamber 101P between the second and third press parts 1012E2 and 1012E3 and the plate 104 and extends in the sound direction SD. The gap between the straight sides 1012Ebbs and 1012Ebcs may be constant. The gap between the straight sides 1012Ebbs and 1012Ebcs may be identical to the width of the straight area R2.

The width Wb of the opening 101H may be equal to the width of the straight area R2. At the center line CL, both ends of the first section 1012Eaa of the coupling portion 1012Ea may be spaced apart from each other by a certain distance Wa. The width Wb may be smaller than the distance Wa. The width of the speaker unit 102 may correspond to the distance Wa. The width of the speaker unit 102 may be equal to or slightly smaller than the distance Wa.

Accordingly, the width Wb of the opening 101H may be smaller than the width of the speaker unit 102. The plate 104 may have a first width W11 (see FIG. 15) corresponding to the distance Wa, and have a second width W12 (see FIG. 15) corresponding to the width Wb. The second width W12 may be smaller than the first width W11.

A stepped portion 1012T may be formed between the second pressed portion 1012E2 and the third pressed portion 1012E3. The stepped portion 1012T may form an obtuse angle with respect to the front surface of the third pressed portion 1012E (see FIG. 14). The stepped portion 1012T may be referred to as an inclined portion 1012T.

Referring again to FIG. 8, the speaker 100 may occupy a relatively small area due to the battery B or the like mounted on the frame 13. That is, the box 101 of the speaker 100 may have a relatively small volume.

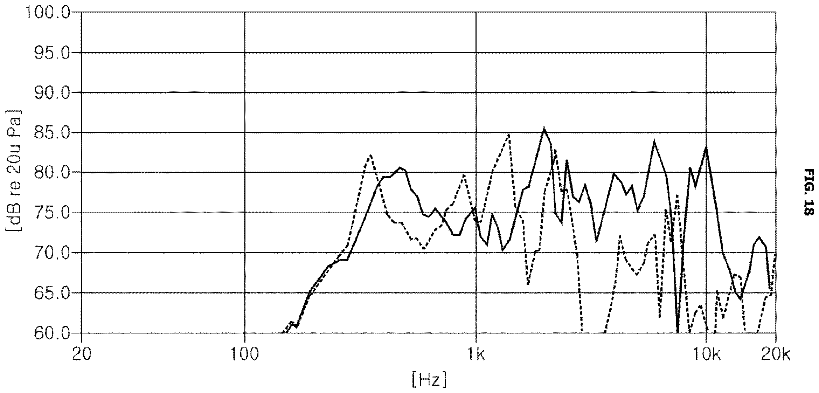

Referring to FIG. 18, the speaker unit 102 of the speaker 100 may have a certain level of low sound reproduction band to cover the relatively small volume of the speaker box 101. The speaker 100 may be a full-range speaker. For example, the low-pitched sound reproduction band may be a band of about 270 to 300 Hz or less, and the high-pitched sound reproduction band may be a band of about 1 kHz or higher.

The speaker 100 may be provided with the cushion 103 and the recessed portion 1012Eb described above with reference to FIGS. 12 to 17, etc., so that a space between the speaker unit 102 and the plate 104 can be reduced. In this case, in comparison with the case where the cushion 103 and the recessed portion 1012Eb are not provided (see the dotted line graph in FIG. 18), the high-pitched sound characteristics of the speaker 100 can be improved (see the solid line graph in FIG. 18).

The speaker 100 may be provided with the stepped portion 1012T described above with reference to FIGS. 12 to 17, etc. In this case, in comparison with the case where the stepped portion 1012T is not provided (see the dotted line graph in FIG. 18), the sound quality of the speaker 100 can be improved (see the solid line graph in FIG. 18).

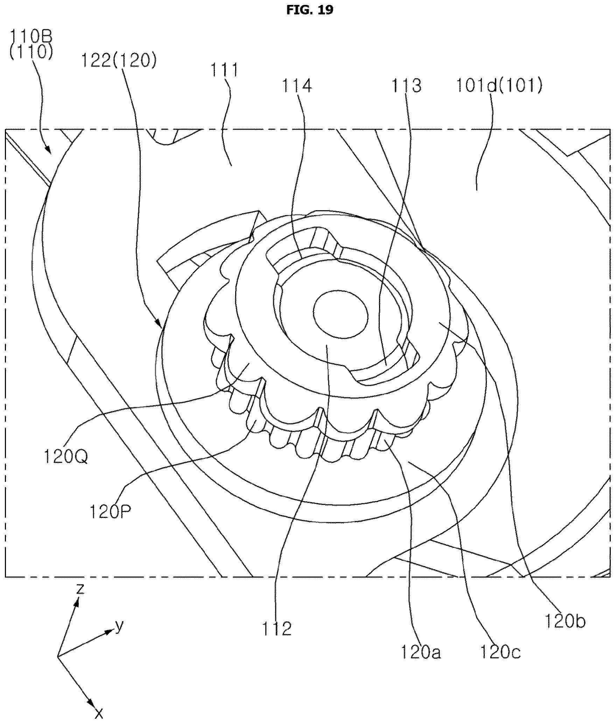

Referring to FIG. 19 together with FIG. 12, a coupling portion 110 may be formed on one side of the speaker box 101. A first coupling portion 110A may be formed on the third side 101c of the speaker box 101, and a second coupling portion 110B may be formed on the fourth side 101d of the speaker box 101. The coupling portion 110 may include a base 111, a protrusion 112, and stoppers 113 and 114. The base 111 may be formed on one side of the speaker box 101 and may be flat. The protrusion 112 may protrude in a forward direction from the base 111. The stoppers 113 and 114 may be formed at the distal end of the protrusion 112 and may be spaced apart from each other. The stoppers 113 and 114 may have a hook shape.

A holder 120 may include a body 120c, a neck 120a, and a head 120b. The holder 120 may have elasticity. The holder 120 may include a soft material such as rubber and cylinder. The body 120c may be located on the base 111, and the neck 120a may protrude in a forward direction from the body 120c. The head 120b may protrude from the distal end of the neck 120a in the radial direction of the neck 120a. Serration-shaped protrusions 120P may be formed on the side surface of the neck 120a. Serration-shaped protrusions 120Q may be formed on the side surface of the head 120b. The protrusion 112 may penetrate the body 120c, the neck 120a, and the head 120b, and the holder 120 may be hooked to the stoppers 113 and 114. Accordingly, the holder 120 may be coupled to the coupling portion 110. A first holder 121 may be coupled to the first coupling portion 110A, and a second holder 122 may be coupled to the second coupling portion 110B.

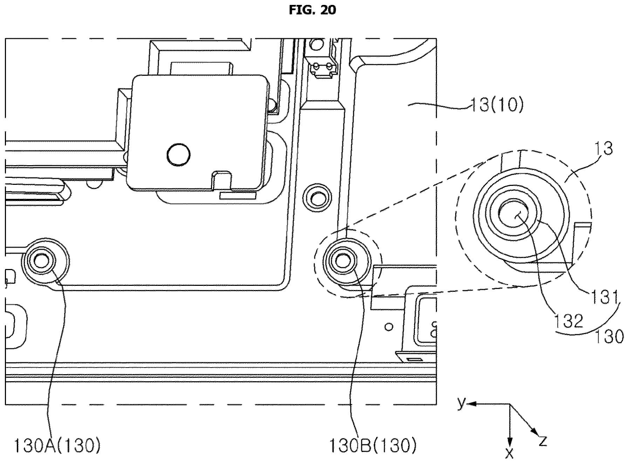

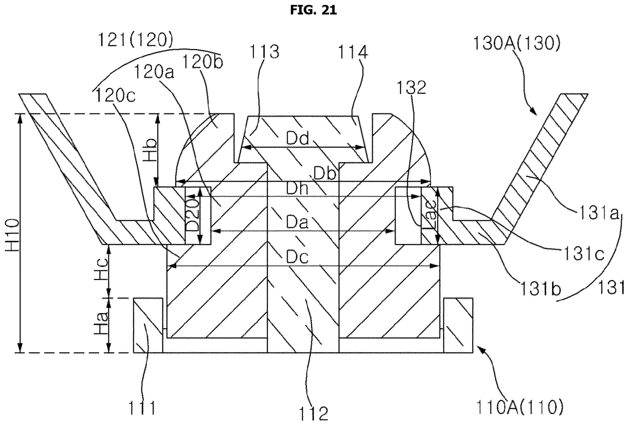

Referring to FIGS. 20 and 21, a fixing portion 130 may be formed by being pressed from the front surface of the frame 13 in a rearward direction. The fixing portion 130 may be referred to as a forming portion 130. A first fixing portion 130A and a second fixing portion 130B may be spaced apart from each other. The fixing portion 130 may include a fixing body 131 and a fixing hole 132. The fixing body 131 may include an inclined portion 131a, a horizontal portion 131b, and a vertical portion 131c. The inclined portion 131a may protrude in a rearward direction from a rear surface of the frame 13, and its diameter may become smaller as it moves away from the rear surface. The horizontal portion 131b may be bent from the distal end of the inclined portion 131a to the inside of the inclined portion 131a, and may have a ring shape parallel to the rear surface of the frame 13. The vertical portion 131c may be bent from the distal end of the horizontal portion 131b toward the rear surface of the frame 13. The horizontal portion 131b and the vertical portion 131c may form a boundary of the fixing hole 132.

The diameter Da of the neck 120a of the holder 120 may be equal to or smaller than the diameter Dh of the fixing hole 132. The diameter Db of the head 120b of the holder 120 may be larger than the diameter Dh of the fixing hole 132. The diameter Dc of the body 120c of the holder 120 may be larger than the diameter Dh of the fixing hole 132. The distance D20 between the body 120c and the head 120b as the length of the neck 120a may be equal to or larger than the length Lac of the vertical portion 131c. When the neck 120a and the head 120b are inserted into the fixing portion 130 through the fixing hole 132, the neck 120a may be located in the fixing hole 132, the body 120c may be located in the horizontal portion 131b, and the head 120b may be hooked to the vertical portion 131c.

Accordingly, since the holder 120 is coupled to the fixing portion 130, the speaker 100 to which the holder 120 is coupled may be mounted on the frame 13.

The second box 1012 of the speaker 100 and the plate 104 may face the rear surface of the frame 13 (see FIG. 17). Front pads 100F (see FIG. 17) may be coupled or attached to the second box 1012 and the plate 104, and may be spaced apart from each other.

The first box 1011 of the speaker 100 may face the front surface of the back cover 15 (see FIG. 2) (see FIG. 9). Rear pads 100R (see FIG. 9) may be coupled or attached to the first box 1011 and may be spaced apart from each other.

Referring again to FIG. 9, a bracket 16 may extend along the circumference of the frame 13 and may be coupled to the rear surface of the frame 13.

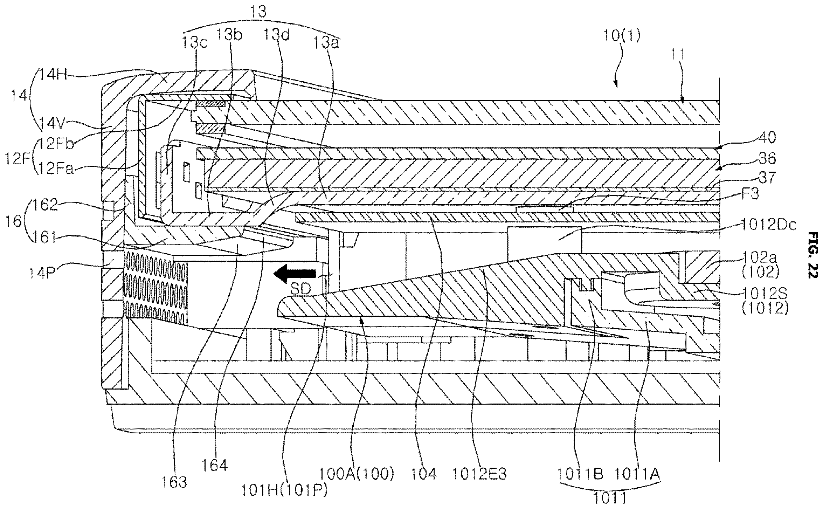

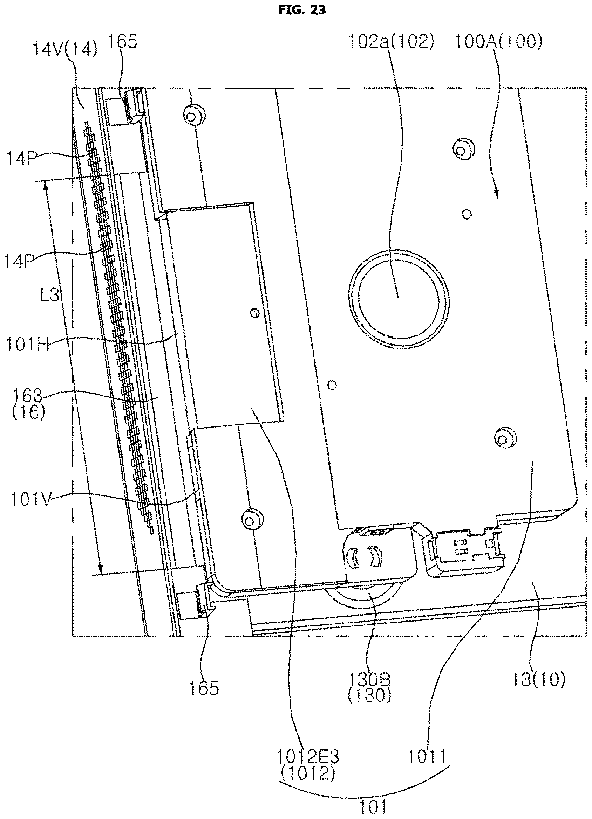

Referring to FIGS. 22 and 23, the frame 13 may include a flat portion 13a, a pressed portion 13b, and a bending portion 13c. The flat portion 13a may form most of the frame 13 and may be formed flat. The pressed portion 13b may be formed by being pressed from the front surface of the flat portion 13a in a rearward direction while being adjacent to the circumference of the flat portion 13a. The pressed portion 13b may be referred to as a bead 13b. The bending portion 13c may be bent in a forward direction from the pressed portion 13b and may form an edge of the frame 13.

An outer hole 14P may be formed in the vertical portion 14V of the outer frame 14 in response to the sound direction SD of the speaker 100. That is, the sound of the speaker 100 can be provided to the outside through the outer hole 14P.

The distal end of the plate 104 of the speaker 100 may face a stepped portion 13d between the flat portion 13a and the pressed portion 13b. That is, the speaker 100 may approach the vertical portion 14V of the outer frame 14 before being interfered with by the stepped portion 13d.

The bracket 16 may include a first part 161 and a second part 162. The first part 161 may be coupled or fixed to the rear surface of the pressed portion 13b. The second part 162 may be bent from the first part 161 and may be located between the vertical portion 12Fa of the front cover 12F and the vertical portion 14V of the outer frame 14.

An inclined portion 163 may form a portion of the first part 161 and may be located between the speaker 100 and the vertical portion 14V of the outer frame 14. The inclined portion 163 may face the opening 101H of the speaker 100 from the outside of the speaker 100. The inclined portion 163 may face from the outside of the speaker 100 toward the outlet of the duct 101V. The length L3 of the inclined portion 163 may be larger than the sum of the width of the opening 101H and the width of the outlet of the duct 101V. The inclined portion 163 may be inclined with respect to the pressed portion 13b. The thickness of the inclined portion 163 may become smaller as it approaches the speaker 100. The distal end 164 of the inclined portion 163 may be formed to be round.

A latch 165 may be formed in the first part 161. The latch 165 may be spaced apart from the inclined portion 163. The back cover 15 may be latch-coupled to the latch 166.

Accordingly, the sound of the speaker 100 can be smoothly provided to the outer hole 14P. The characteristics of the mid-pitched and high-pitched sounds of the speaker 100 can be improved. The sound quality of the speaker 100 may be improved.

Referring to FIGS. 1 to 23, the display device 1 may include: a display panel 11; a frame 13 located behind the display panel 11; and a speaker 100 coupled to a rear of the frame 13, the speaker 100 may include: a speaker box 101; a speaker unit 102 coupled to the speaker box 101; a plate 104 covering the speaker unit 102 and coupled to the speaker box 101; a chamber 101P which is formed between the speaker unit 102 and the plate 104, and which is opened in one direction; and a cushion 103 occupying a portion of the chamber 101P.

The speaker unit 102 may include: a speaker frame 102F coupled to the speaker box 101; and a diaphragm 102g which is coupled to the speaker frame 102F to be able to vibrate, the plate 104 may cover the speaker frame 102F and the diaphragm 102g, the cushion 103 may be located on the speaker frame 102F.

The plate 104 may press the cushion 103 toward the speaker frame 102F.

The speaker frame 102F may have a ring shape, and the cushion 103 may be opposite to an opening of the chamber 101P and may extend along the speaker frame 102F to have an arc shape.

The speaker box 101 may include: a coupling portion 1012Ea at which the plate 104 is located; a recessed portion 1012Eb recessed from the coupling portion 1012Ea; and a support portion 1012S which forms a step lowered from the recessed portion 1012Eb, and at which the speaker frame 102F is located, the recessed portion 1012Eb may occupy a portion of the chamber 101P between the coupling portion 1012Ea and the support portion 1012S.

With respect to the coupling portion 1012Ea, a depth of the recessed portion 1012Eb may be smaller than a depth of the speaker frame 102F.

The speaker frame 102F may have a ring shape. The recessed portion 1012Eb may include: a first part 1012Eba which is opposite to an opening of the chamber 101P, and extends along the speaker frame 102F to have an arc shape; a second part 1012Ebb which extends from one end of the first part 1012Eba toward the opening 101H; and a third part 1012Ebc which extends from the other end of the first part 1012Eba toward the opening 101H.

The opening 101H of the chamber 101P may be formed between the second part 1012Ebb and the third part 1012Ebc, and a gap between the second part 1012Ebb and the third part 1012Ebc may be smaller than a width of the speaker frame 102F.

The speaker box 101 may include a coupling portion 1012Ea which extends along an edge of the plate 104 and which supports the plate 104 adjacent to the edge. The speaker frame 102F may have a ring shape. The coupling portion 1012Ea may include: a first section 1012Eaa which is opposite to an opening 101H of the chamber 101P, and which extends along a semicircle of the speaker frame 102F; a second section 1012Eab extending from one end of the first section 1012Eaa toward the opening 101H; and a third section 1012Eac extending from the other end of the first section 1012Eaa toward the opening 101H, a gap between the second section 1012Eab and the third section 1012Eac may become smaller as it approaches the opening 101H.

The speaker box 101 may further include fixing portions 1012D which are located inside the coupling portion 1012Ea, are which are spaced apart from each other, and which support the plate 104, the plate 104 may be coupled to the coupling portion 1012Ea and the fixing portions 1012D.

The speaker box 101 may include: a first pressed portion 1012E1 which forms a step lowered from one surface of the speaker box 101, and at which the plate 104 is located; a second pressed portion 1012E2 which is located between the speaker frame 102F and an opening 101H of the chamber 101P, and which forms a step that is lowered from the first pressed portion 1012E1; a third pressed portion 1012E3 which is located between the second pressed portion 1012E2 and the opening 101H of the chamber 101P, and which forms a step that is lowered from the second pressed portion 1012E2; and a support portion 1012S which forms a step that is lowered from the first pressed portion 1012E1 and the second pressed portion 1012E2, and in which the speaker frame 102F is located.

The opening 101H of the chamber 101P may be formed between the plate 104 and the third pressed portion 1012E3, and a gap between the plate 104 and the third pressed portion 1012E3 may be larger than a gap between the plate 104 and the second pressed portion 1012E2.

The speaker 100 may further include a duct 101V which is adjacent to an opening 101H of the chamber 101P and which provides a flow path connecting an inside of the speaker box 101 and an outside of the speaker box 101.

The display device 1 may further include: an outer frame 14 extending along an edge of the frame 13, the outer frame 14 having a hole 14P facing an opening 101H of the chamber 101P; a bracket 16 coupled to the frame 13 adjacent to the edge of the frame 13; and a back cover 15 covering a rear of the frame 13, the bracket may include: an inclined portion 163 which is located between the hole 14P of the outer frame 14 and the opening 101H of the chamber 101P, and which has a length larger than a width of the opening 101H of the chamber 101P; and a latch 165 which is located outside the inclined portion 163, and to which the back cover 15 is coupled, a distal end of the inclined portion 163 facing the opening 101H of the chamber 101P may be formed in a round shape.

The display device 1 may further include: a battery B coupled to a rear of the frame 13. The speaker 100 may include: a first speaker 100A located between a first side of the frame 13 and the battery B; and a second speaker 100B located between the battery B and a second side of the frame 13 opposite the first side.

The effects of the display device according to the present disclosure will be described as follows.

According to at least one of the embodiments of the present disclosure, it is possible to provide a structure that can improve the sound quality of a speaker of a display device.

According to at least one of the embodiments of the present disclosure, it is possible to provide a structure that can improve the mid-and high-pitched sound characteristics of a speaker.

According to at least one of the embodiments of the present disclosure, it is possible to provide a display device having a speaker capable of providing clear sound.

According to at least one of the embodiments of the present disclosure, it is possible to provide a structure for smoothly outputting sound from a speaker to the outside of a display device.

Certain embodiments or other embodiments of the disclosure described above are not mutually exclusive or distinct from each other. Any or all elements of the embodiments of the disclosure described above may be combined or combined with each other in configuration or function.

For example, a configuration "A" described in one embodiment of the disclosure and the drawings and a configuration "B" described in another embodiment of the disclosure and the drawings may be combined with each other. Namely, although the combination between the configurations is not directly described, the combination is possible except in the case where it is described that the combination is impossible.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A display device (1) comprising:
a display panel (11);
a frame (13) located behind the display panel (11); and
a speaker (100) coupled to a rear of the frame (13),
wherein the speaker (100) comprises:
a speaker box (101);
a speaker unit (102) coupled to the speaker box (101);
a plate (104) covering the speaker unit (102) and coupled to the speaker box (101);
a chamber (101P) which is formed between the speaker unit (102) and the plate (104), and which is opened in one direction; and
a cushion (103) occupying a portion of the chamber (101P).

2. The display device (1) of claim 1, wherein the speaker unit (102) comprises:
a speaker frame (102F) coupled to the speaker box (101); and
a diaphragm (102g) which is coupled to the speaker frame (102F) to be able to vibrate,
wherein the plate (104) covers the speaker frame (102F) and the diaphragm (102g), and
wherein the cushion (103) is located on the speaker frame (102F).

3. The display device (1) of claim 2, wherein the plate (104) presses the cushion (103) toward the speaker frame (102F).

4. The display device (1) of claim 2 or 3, wherein the speaker frame (102F) has a ring shape, and
wherein the cushion (103) is opposite to an opening (101H) of the chamber (101P) and extends along the speaker frame (102F) to have an arc shape.

5. The display device (1) of any one of claims 2 to 4, wherein the speaker box (101) comprises:
a coupling portion (1012Ea) at which the plate (104) is located;
a recessed portion (1012Eb) recessed from the coupling portion (1012Ea); and
a support portion (1012S) which forms a step lowered from the recessed portion (1012Eb), and at which the speaker frame (102F) is located, and
wherein the recessed portion (1012Eb) is located between the coupling portion (1012Ea) and the support portion (1012S), and occupies a portion of the chamber (101P).

6. The display device (1) of claim 5, wherein, with respect to the coupling portion (1012Ea), a depth of the recessed portion (1012Eb) is smaller than a depth of the speaker frame (102F).

7. The display device (1) of claim 5 or 6, wherein the speaker frame (102F) has a ring shape, and
wherein the recessed portion (1012Eb) comprises:
a first part (1012Eba) which is opposite to an opening (101H) of the chamber (101P), and extends along the speaker frame (102F) to have an arc shape;
a second part (1012Ebb) which extends from one end of the first part (1012Eba) toward the opening (101H); and
a third part (1012Ebc) which extends from the other end of the first part (1012Eba) toward the opening (101H).

8. The display device (1) of claim 7, wherein the opening (101H) of the chamber (101P) is formed between the second part (1012Ebb) and the third part (1012Ebc), and
a gap between the second part (1012Ebb) and the third part (1012Ebc) is smaller than a width of the speaker frame (102F).

9. The display device (1) of any one of claims 2 to 8, wherein the speaker box (101) comprises a coupling portion (1012Ea) which extends along an edge of the plate (104) and which supports the plate (104) adjacent to the edge,
wherein the speaker frame (102F) has a ring shape,
wherein the coupling portion (1012Ea) comprises:
a first section (1012Eaa) which is opposite to an opening (101H) of the chamber (101P), and which extends along a semicircle of the speaker frame (102F);
a second section (1012Eab) extending from one end of the first section (1012Eaa) toward the opening (101H); and
a third section (1012Eac) extending from the other end of the first section (1012Eaa) toward the opening (101H), and
wherein a gap between the second section (1012Eab) and the third section (1012Eac) becomes smaller as it approaches the opening (101H).

10. The display device (1) of claim 9, wherein the speaker box (101) further comprises fixing portions (1012D) which are located inside the coupling portion (1012Ea), are which are spaced apart from each other, and which support the plate (104), and
wherein the plate (104) is coupled to the coupling portion (1012Ea) and the fixing portions (1012D).

11. The display device (1) of any one of claims 2 to 10, wherein the speaker box (101) comprises:
a first pressed portion (1012E1) which forms a step lowered from one surface of the speaker box (101), and at which the plate (104) is located;
a second pressed portion (1012E2) which is located between the speaker frame (102F) and an opening (101H) of the chamber (101P), and which forms a step that is lowered from the first pressed portion (1012E1);
a third pressed portion (1012E3) which is located between the second pressed portion (1012E2) and the opening (101H) of the chamber (101P), and which forms a step that is lowered from the second pressed portion (1012E2); and
a support portion (1012S) which forms a step that is lowered from the first pressed portion (1012E1) and the second pressed portion (1012E2), and in which the speaker frame (102F) is located.

12. The display device (1) of claim 11, wherein the opening (101H) of the chamber (101P) is formed between the plate (104) and the third pressed portion (1012E3), and
wherein a gap between the plate (104) and the third pressed portion (1012E3) is larger than a gap between the plate (104) and the second pressed portion (1012E2).

13. The display device (1) of any one of claims 1 to 12, wherein the speaker (100) further comprises a duct (101V) which is adjacent to an opening (101H) of the chamber (101P) and which provides a flow path connecting an inside of the speaker box (101) and an outside of the speaker box (101).

14. The display device (1) of any one of claims 1 to 13, further comprising:
an outer frame (14) extending along an edge of the frame (13), the outer frame (14) having a hole (14P) facing an opening (101H) of the chamber (101P);
a bracket (16) coupled to the frame (13) adjacent to the edge of the frame (13); and
a back cover (15) covering a rear of the frame (13),
wherein the bracket (16) comprises:
an inclined portion (163) which is located between the hole (14P) of the outer frame (14) and the opening (101H) of the chamber (101P), and which has a length larger than a width of the opening (101H) of the chamber (101P); and
a latch (165) which is located outside the inclined portion (163), and to which the back cover (15) is coupled, and
wherein a distal end of the inclined portion (163) facing the opening (101H) of the chamber (101P) is formed in a round shape.

15. The display device (1) of any one of claims 1 to 14, further comprising a battery (B) coupled to a rear of the frame (13), and
wherein the speaker (100) comprises:
a first speaker (100A) located between a first side of the frame (13) and the battery (B); and
a second speaker (100B) located between the battery (B) and a second side of the frame (13) opposite the first side.
